Europäisches Patentamt

European Patent Office

Office européen des brevets

(19)

(11) Veröffentlichungsnummer: **0 325 919 B1**

(12) **EUROPÄISCHE PATENTSCHRIFT**

(45) Veröffentlichungstag der Patentschrift: **15.12.93**

(21) Anmeldenummer: **89100177.8**

(22) Anmeldetag: **05.01.89**

(51) Int. Cl.5: **H01G 9/04**, H01G 9/00, H01G 9/02

(54) **Aluminium-Electrolytkondensator und Verfahren zu seiner Herstellung.**

(30) Priorität: **12.01.88 DE 3800641**
**08.02.88 DE 3803768**
**10.06.88 DE 3819850**

(43) Veröffentlichungstag der Anmeldung:
**02.08.89 Patentblatt 89/31**

(45) Bekanntmachung des Hinweises auf die
Patenterteilung:
**15.12.93 Patentblatt 93/50**

(84) Benannte Vertragsstaaten:
**DE ES FR GB IT SE**

(56) Entgegenhaltungen:
**DE-A- 1 489 839**
**DE-A- 2 950 246**
**DE-C- 870 587**
**GB-A- 1 445 894**

(73) Patentinhaber: **SIEMENS AKTIENGESELL-
SCHAFT
Wittelsbacherplatz 2
D-80333 München(DE)**

(72) Erfinder: **Schweikert, Wilhelm, Dipl.-Ing. (FH)
Kistelbergstrasse 33
D-7920 Heidenheim(DE)**
Erfinder: **Will, Norbert, Dipl.-Phys.
Emil-Nolde-Strasse 13
D-7920 Heidenheim(DE)**
Erfinder: **Lauer, Wilhelm, Dr. rer. nat.,
Dipl.-Chem.
Feldlesweg 8
D-7928 Giengen 6(DE)**

EP 0 325 919 B1

**Beschreibung**

Die Erfindung betrifft einen Aluminium-Elektrolytkondensator, der aus aufgewickelten Lagen von zwei Aluminiumfolien besteht, von denen die als Anode dienende Folie mit einer als Dielektrikum wirkenden Oxidschicht versehen ist, wobei diese Anodenfolie gegebenenfalls durch Abtrennen aus einer größeren formierten Folienbahn hergestellt ist, bei dem zwischen den beiden Aluminiumfolien mit einem Betriebselektrolyt getränkte Abstandshalter angeordnet sind und bei dem die Aluminiumfolien mit angenieteten und /oder angeschweißten Stromzuführungsanschlußstreifen kontaktiert sind sowie ein Verfahren zu seiner Herstellung.

Die Spannungsfestigkeit von Aluminium-Elektrolytkondensatoren wird im wesentlichen durch die dielektrische Oxidschicht, den Elektrolyt und den Abstandshalter (Papier, Kunststoffolien oder ähnliches) begrenzt. Vor allem der Elektrolyt ist für eine maßgebende Begrenzung der Spannungsfestigkeit verantwortlich, so daß es oberhalb von einer durch den jeweiligen Betriebselektrolyt bedingten Spannung zur erhöhten Gasentwicklung und dann zu Überschlägen kommt.

Dieses Problem läßt sich dadurch umgehen, daß alle Aufbauteile auf die hohe Spitzenspannung ausgelegt werden. Dies ist einerseits mit großen Kosten verbunden und hat andererseits den Nachteil, daß man gezwungen ist, Betriebselektrolyte mit hoher Funkenspannung einzusetzen, die aber eine niedere Leitfähigkeit aufweisen. Hierdurch werden die elektrischen Verlusteigenschaften des Kondensators wesentlich verschlechtert.

Schwachstellen bezüglich der Spitzenspannungsfestigkeit sind Punkte der Anode, an denen sie der Elektrolyt ohne eine den Vorwiderstand heraufsetzende Separatorschicht berührt, sowie solche Flächen, die nicht mit einer Vorformierschicht versehen sind (z.B. Anodenschnittkanten, Anschlußelemente).

Aus der DE-C 870 587 ist ein Elektrolytkondensator bekannt, bei dem die Schnittkante der vorformierten Folie mit einem nichtleitendem, gegenüber dem Elektrolyt indifferenten, vorzugsweise aus Lack bestehenden Überzug versehen ist. Hierbei besteht die Schwierigkeit, daß nur die Schnittkanten abgedeckt werden, aber im Inneren des Wickels liegende Partien nicht oder nur mit sehr großem Aufwand inaktiviert werden können.

Weiterhin ist es aus der DE 29 50 246 A1 bekannt, über den Anschlußstreifen Kunststoffkaschierungen anzuordnen. Bei dieser Art der Abdeckung entstehen große Spalte im Kondensatorwickel, welche zu großen Streuungen der elektrischen Werte führen. Mit diesem Verfahren lassen sich die Schnittkanten nicht inaktivieren.

Aus der DE 30 04 728 A1 ist es bekannt, die Stromzuführungsanschlußstreifen durch eine Temperaturbehandlung mit einer $\gamma$--$Al_2O_3$-Schicht zu versehen. Fehler an der Anodenfolie lassen sich mit diesem Verfahren nicht beheben, da die durch anodische Oxidation erzeugte Dielektrikumsschicht durch die Temperaturbehandlung geschädigt würde.

Ferner ist es aus der GB-A-1 445 894 bekannt, einem Elektrolyten feine Teilchen an kieselerde beizumengen, die als Gelbildung dienen, um ein Abfließen des Elektrolyten zwischen den Wicklungen zu verhindern.

Schließlich ist es aus der DE 14 89 839 A bekannt, einem Elektrolytkondensator chemische Stoffe, wie Barium-, Strontium-oder Calciumoxid zuzusetzen um schädliche Folgen von Feuchtigkeit in Verbindung mit Gasen abzuschwächen oder völlig zu verhindern. Eine Inaktivierung von Schnittkanten und Fehlstellen wird hiermit nicht erreicht.

Aufgabe der Erfindung ist es, einen Aluminium-Elektrolytkondensator der eingangs genannten Art sowie ein Verfahren zu seiner Herstellung anzugeben, bei dem mit einfachen Mitteln in kostengünstiger Weise eine Inaktivierung der angeführten Schwachstellen erfolgt.

Diese Aufgabe wird erfindungsgemäß durch den kennzeichnenden Teil des Anspruchs 1 gelöst.

Zweckmäßige Ausgestaltungen der Erfindung sind in den Unteransprüchen angeführt.

Die Vorteile des Gegenstandes der Erfindung bestehen darin, daß die Funkenspannung des Betriebselektrolyts bzw. dessen Leitfähigkeit nur an den Schwachstellen herauf- bzw. herabgesetzt ist. Durch das feinkörnige Material wird nämlich der Wirkungsquerschnitt des Elektrolyts herabgesetzt, was gleichbedeutend mit niedrigerer Leitfähigkeit und damit verbunden höherer Funkenspannung ist.

Es kann somit ein höherleitender Betriebselektrolyt verwendet werden, ohne daß nachteilige Folgen zu befürchten sind.

Das elektrolytgetränkte feinkörnige Material in Form der kieselsäure wirkt sozusagen als Vorwiderstand bzw. als Mittel zur Verringerung der Ladungsträgerdichte an der Schwachstelle.

Der Auftrag kann selektiv oder allgemein, trocken oder im gewünschtem Betriebselektrolyt aufgeschlämmt erfolgen.

Wenn die Gefahr besteht, daß beispielsweise durch Bildung von Luftblasen der schützende Auftrag nicht an alle erforderlichen Flächen, insbesondere im Wickelinneren gelangen kann, ist es besonders vorteilhaft, wenn dem Betriebselektrolyt vor dem Imprägnieren des Kondensators das elektrolytverträgliche feinkörnige Material zugemischt wird und der Kondensator mit dieser Mischung imprägniert wird, wobei gegebenenfalls zusätzlich feinkörniges Material selektiv auf den Kondensatorwickel aufgetragen werden kann. Das dem Betriebselektrolyt zugemischte feinkörnige Material (Kieselsäure, Papierfasern,...) kann an den Abstandshaltern (Elektrolytkondensatorpapier oder andere eingewickelte Separatoren) überwiegend ausgefiltert werden, so daß beim Imprägnieren das feinkörnige Material an den Schwachstellen (Schnittkanten, Anschlußstreifen) des Elektrolytkondensators hängen bleibt und hier ein Elektrolytgemisch mit höherer Spannungsfestigkeit bildet.

Weitere Vorteile werden anhand der folgenden Ausführungsbeispiele erläutert.

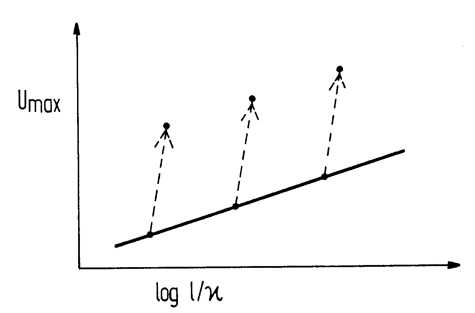

In der dazugehörenden Zeichnung mit einer einzigen Figur ist die lineare Abhängigkeit der maximalen Bestriebsspannung $U_{max}$ vom Logarithmus der reziproken Leitfähigkeit log $1/x$ verschiedener herkömmlicher Betriebselektrolyte als durchgezogene Linie dargestellt. Für jeden Elektrolyt mit bekannter Leitfähigkeit kann somit der zu erwartende Wert für die maximale Betriebsspannung $U_{max}$ abgeschätzt werden.

Da dem Betriebselektrolyt hochreine, hochdisperse und feindispergierte Kieselsäure mit einer spezifischen Oberfläche von ca. 50 bis ca. 300 m$^2$/g und einer mittleren Primärteilchengröße von ca. 10 bis ca. 40 nm zugesetzt wird, werden die Funkenspannung und die maximale Betriebsspannung $U_{max}$ des Betriebselektrolyts erheblich höher angehoben, als aufgrund des geringen Leitfähigkeitsverlustes zu erwarten ist. Dies ist in der Zeichnung anhand der unterbrochenen Linien dargestellt.

Wie bereits erwähnt, wird dieser Effekt darauf zurückgeführt, daß sich beim Imprägnieren ein großer Anteil der Kieselsäure an den Folienschnittkanten und den Anschlußelementen absetzt und dort lokal die Spannungsfestigkeit erhöht. Dabei verändert die Kieselsäure den Betriebselektrolyt chemisch nicht und wird infolge der feinen Dispersion beim Imprägnieren auch nicht an den Stirnseiten abgefiltert, sondern gelangt bis ins Innere des Kondensatorwickels. Die Kieselsäure liegt dabei als amorphes Siliciumdioxid vor, das durch Knallgashydrolyse gewonnen ist und beispielsweise unter dem Handelsnamen "Aerosil" erhältlich ist.

Durch den Einsatz geeigneter Dispergier-Geräte kann die Kieselsäure so fein dispergiert werden, daß der Elektrolyt in fast ungefilterter Form in den Wickel eindringt und auch mit höherem Kieselsäureanteil imprägnierbar ist. Bei Einsatz von Kieselsäure mit geringerer spezifischer Oberfläche im Bereich des unteren Grenzwertes, d.h. bei ca. 50 m$^2$/g läßt sich die Dispergierbarkeit weiter steigern, da diese Kieselsäure eine geringere Verdickungswirkung aufweist.

Der Betriebselektrolyt mit hochdispersem, amorphem Siliciumdioxid zeichnet sich nicht nur durch eine höhere Funkenspannung, sondern in einigen Fällen auch durch einen geringeren Reststrom der damit impägnierten Elektrolytkondensatoren aus.

Durch die Verdickungswirkung des hochdispersen Siliciumdioxids wird die Viskosität des Betriebselektrolyts besonders bei hohen Betriebstemperaturen stark erhöht. Damit wird der Einfluß der Schwerkraft und von Beschleunigungskräften auf die Stabilität des Betriebselektrolyt-Abstandshalter (Separator)-Systems vermindert. Die Viskosität des Betriebselektrolyts ist deshalb von der Temperatur weniger abhängig als beim herkömmlichen Elektrolyt.

Bei einem Betriebselektrolyt, der aus 9,0 bis 11,0 Mol Ethylenglykol, 2,0 bis 5,0 Mol Borsäure, 0,1 bis 0,5 Mol Adipinsäure, 0,9 bis 1,5 Mol Ammoniak, 0,05 bis 0,15 Mol Phosphorsäure und 4,0 bis 6,0 Mol Wasser besteht, und der in der DE-PS 26 41 931 beschrieben ist, wurden 4 Gew.-% amorphes Siliciumdioxid mit einer spezifischen Oberfläche von 200 +/- 25 m$^2$/g (gemessen nach DIN 66131) zugesetzt, wobei die mittlere Größe der Primärteilchen 12 nm betrug. Die maximale Betriebsspannung des Betriebselektrolyts wurde hierbei von 470 V auf 510 V erhöht. Die Leitfähigkeitsabnahme betrug dagegen nur 10 %, woraus nach klassischer Abschätzung gemäß der Zeichnung nur eine Zunahme der Maximalspannung $U_{max}$ um 4 V zu erwarten wäre.

Weiterhin wurden beim gleichen Elektrolytsystem amorphes Siliciumdioxid mit einer mittleren Oberfläche von 50 +/- 15 m$^2$/g und einer mittleren Größe der Primärteilchen von 40 nm zugesetzt.

Hiermit wurden Aluminium-Elektrolytkondensatoren der Nennwerte 6,8 $\mu$F / 450 V imprägniert und die Restströme nach 5 Minuten Meßzeit bestimmt. Gegenüber einen Reststrom von 4,8 $\mu$A für den Betriebselektrolyt ohne Zusatz ergab sich ein Reststromwert von 1,4 $\mu$A für einen Betriebselektrolyt mit dem beschriebenen Kieselsäurezusatz.

Neben den in den Ausführungsbeispielen beschriebenen Hochvolt-Betriebselektrolyteneignet sich der beanspruchte Zusatz von amorphem Siliciumdioxid auch für Niedervolt-Betriebselektrolyte.

Ferner ist es möglich, den mit dem Betriebselektrolyt imprägnierten Wickel mit dem feinkörnigen Material zu versehen, wobei beim Auftrag auf die Wickelstirnseiten der schützende Auftrag bis zu den Wickelstirnkanten und entlang der spaltbildenden Anschlußelemente in den Wickel eindringt.

Ein weiterer Effekt der Behandlung mit einem gelartigen Auftrag aus mit Betriebselektrolyt aufgeschlämmten feinkörnigen Material auf die Anschlußstreifen (speziell im Bereich des Austritts aus dem Wickel) besteht in einer deutlichen Verringerung der Korrosionsgefahr an diesen Stellen. Die bei manchen Elektrolyten und hohen Betriebsspannung im Phasenübergang entstehende Korrosion wird durch Auftrag des feinkörnigen Materials bzw. des gelförmig angedickten Elektrolyts größtenteils verhindert oder zeitlich wesentlich hinausgeschoben.

Der Gegenstand der Erfindung gestattet somit in einfacher Weise eine Verbesserung der Spannungsfestigkeit von Aluminium-Elektrolytkondensatoren bei gleichzeitiger Verbesserung der elektrischen Werte und einer Verhinderung der Korrosion.

In der nachfolgenden Tabelle ist ein Vergleich zwischen herkömmlichen Elektrolytkondensatoren und erfindungsgemäß behandelten Elektrolytkondensatoren enthalten.

| | maximale Spitzenspannung (t > 1 h) | Bei der Nachformierung auf 605 V entstehendes Gas | Zeit um nach Lagerung 600 V zu erreichen (1 mA konst., C=10 μF) |
|---|---|---|---|
| herkömmliche Elektrolytkond. | 600 V | 1,8 ... 6,0 cm³ | 10 ... 25 sec (z.T. nicht erreicht |
| behandelte Elektrolytkond. | 640 V | 0,8 ... 1,1 cm³ | 10 ... 13 sec |

Der Tabelle ist zu entnehmen, daß der Gegenstand der Erfindung höhere Spitzenspannungswerte bei wesentlich verminderter Gasentstehung aufweist und auch nach einer spannungslosen Lagerung die erforderliche Spannungsfestigkeit besitzt.

**Patentansprüche**

1. Aluminium-Elektrolytkondensator, der aus aufgewickelten Lagen von zwei Aluminiumfolien besteht, von denen die als Anode dienende Folie mit einer als Dielektrikum wirkenden Oxidschicht versehen ist, wobei diese Anodenfolie gegebenenfalls durch Abtrennen aus einer größeren formierten Folienbahn hergestellt ist, bei dem zwischen den beiden Aluminiumfolien mit einem Betriebselektrolyt getränkte Abstandshalter angeordnet sind und bei dem die Aluminiumfolien mit angenieteten und/oder angeschweißten Stromzuführungsanschlußstreifen kontaktiert sind, **dadurch gekennzeichnet,** daß die Anschlußelemente und die an den Wickelstirnseiten angeordneten Schnittkanten der Aluminiumfolie mit einer feinkörnigen, elektrolytverträglichen, hochreinen, hochdispersen und feindispergierten Kieselsäure mit einer spezifischen Oberfläche von ca. 50 bis ca. 300 m$^2$/g und einer mittleren Primärteilchengröße von ca. 10 bis ca. 40 nm abgedeckt sind.

2. Verfahren zum Herstellen eines Aluminium-Elektrolytkondensators nach Anspruche 1, **dadurch gekennzeichnet,** daß die kieselsäure trocken oder in dem entsprechenden Betriebselektrolyt aufgeschlämmt aufgetragen wird.

3. Verfahren nach Anspruch 2, **dadurch gekennzeichnet,** daß die kieselsäure auf den mit dem Betriebselektrolyt imprägnierten Kondensatorwickel aufgetragen wird.

4. Verfahren nach Anspruch 2, **dadurch gekennzeichnet,** daß dem Betriebselektrolyt vor dem Imprägnieren des Kondensators die kieselsäure zugemischt wird und der Kondensator mit dieser Mischung imprägniert wird.

4

**5.** Verfahren nach Anspruch 4, **dadurch gekennzeichnet,** daß zusätzlich feinkörniges Material selektiv auf den Kondensatorwickel aufgetragen wird.

## Claims

**1.** Aluminium electrolytic capacitor which comprises wound layers of two aluminium foils of which the foil which serves as anode is provided with an oxide layer which acts as dielectric, this anode foil optionally being produced by cutting from a larger, formed foil sheet, in which capacitor spacers impregnated with a working electrolyte are disposed between the two aluminium foils and in which capacitor contact is made to the aluminium foils by riveted-on and/or welded-on current supply connecting strips, characterized in that the connecting elements and those cut edges of the aluminium foil that are disposed at the winding end faces are covered with a fine-grained, electrolyte-compatible, high purity, highly disperse and finely dispersed silicic acid having a specific surface of approximately 50 to approximately 300 $m^2$/g and a mean primary particle size of approximately 10 to approximately 40 nm.

**2.** Method of producing an aluminium electrolytic capacitor according to Claim 1, characterized in that the silicic acid is applied dry or suspended in the appropriate working electrolyte.

**3.** Method according to Claim 2, characterized in that the silicic acid is applied to the capacitor winding impregnated with the working electrolyte.

**4.** Method according to Claim 2, characterized in that the silicic acid is added to the working electrolyte before the impregnation of the capacitor and the capacitor is impregnated with this mixture.

**5.** Method according to Claim 4, characterized in that fine-grained material is additionally applied selectively to the capacitor winding.

## Revendications

**1.** Condensateur électrolytique à l'aluminium, qui est constitué de deux couches enroulées de deux feuilles d'aluminium, dont la feuille servant d'anode est munie d'une couche d'oxyde agissant en tant que diélectrique, cette feuille d'anode étant fabriquée éventuellement par découpage dans une bande de feuille activée plus grande, des entretoises imprégnées d'un électrolyte de fonctionnement étant interposées entre les deux feuilles d'aluminium et les feuilles d'aluminium étant en contact avec des bandes de raccordement rivetées et/ou soudées d'amenée du courant, caractérisé en ce que les éléments de raccordement et les bords de coupe des feuilles d'aluminium qui sont disposées sur les côtés frontaux de l'enroulement, sont recouverts d'acide silicique, à grains fins, compatible avec l'électrolyte, très dur, très dispersé et finement réparti ayant une surface spécifique de 50 à 300 $m^2$/g environ et une granulométrie primaire moyenne de 10 à 40 nm environ.

**2.** Procédé de fabrication d'un condensateur électrolytique en aluminium suivant la revendication 1, caractérisé en ce qu'il consiste à déposer l'acide silicique à sec ou en suspension dans l'électrolyte de fonctionnement correspondant.

**3.** Procédé suivant la revendication 2, caractérisé en ce qu'il consiste à déposer l'acide silicique sur l'enroulement du condensateur imprégné de l'électrolyte de fonctionnement.

**4.** Procédé suivant la revendication 2, caractérisé en ce qu'il consiste à mélanger l'acide silicique à l'électrolyte de fonctionnement avant l'imprégnation du condensateur et à imprégner le condensateur de ce mélange.

**5.** Procédé suivant la revendication 4, caractérisé en ce qu'il consiste à déposer en outre un matériau en grains fins sélectivement sur l'enroulement du condensateur.